# EUROPÄISCHE PATENTANMELDUNG

(11) **EP 0 817 353 A2**
(43) Veröffentlichungstag der Anmeldung: **07.01.1998**
(21) Anmeldenummer: 97110876.6
(22) Anmeldetag: 02.07.1997
(51) Int. Cl.: H02J 9/00

(54) **Vorrichtung zur Verringerung der Standby-Leistung eines elektrischen Geräts**

(30) Priorität: 04.07.1996 DE 19626950
(71) Anmelder: Kunert, Willi, 75328 Schömberg (DE)
(72) Erfinder: Kunert, Willi, 75328 Schömberg (DE)
(74) Vertreter: Reinhardt, Harry

(57) **Zusammenfassung**

Eine Vorrichtung zur Verringerung der Standby-Leistung eines elektrischen, über eine Fernbedienung betätigbaren Geräts weist eine Empfängerschaltung mit wenigstens einer Photodiode (D1,D2) zum Empfang der von der Fernbedienung gesendeten, gepulsten Lichtsignale (S), eine parallel zur Photodiode geschalteten Widerstandsschaltung (W) zur Kompensation von Gleichlichtsignalen und einen Netzanschluß (N) für eine Versorgungsspannung (U) auf. Die Widerstandsschaltung (W) unfaßt einen selbstregelnden Transistor (T1) als Widerstand, der spannungsabhängig seinen Widerstand ändert, sobald eine vorgegebene Spannung unterhalb der Sättigungsspannung der Photodiode überschritten ist, und durch den spannungsabhängigen Widerstand die Photodiode (D1,D2) belastet, bis die vorgegebene Spannung im wesentlichen erreicht ist. Ferner ist ein erster Widerstand (R1) parallel zur Kollektor-Basisstrecke des Transistors (T1) geschalten ist und ein hochohmiger Widerstand (R2) zwischen der Basis des Transistors (T1) und der Versorgungsspannung (U) angeordnet, wobei der erste Widerstand (R1) im Verhältnis zum hochohmigen Widerstand (R2) so gewählt ist, daß bei kurzgeschlossener Emitter-Kollektorstrecke des Transistors am Mittelanschluß R1/R2 eine Spannung anliegt, die kleiner als die Öffnungsspannung des Transistors (T1) ist. Dadurch ist ein möglichst stromarmer Betrieb bei vollständiger Trennung des angeschlossenen Geräts vom Netz im Standby-Betrieb gewährleistet.

## Beschreibung

Die Erfindung betrifft eine Vorrichtung zur Verringerung der Standby-Leistung eines elektrischen Geräts nach dem Oberbegriff des Anspruches 1.

Die meisten Geräte der Unterhaltungselektronik, aber auch Geräte auf anderen Gebieten sind mit einer Fernbedienung auf Infrarot-Basis ausgestattet. Um diese Geräte ständig betriebsbereit zu halten, werden sie dauerhaft mit Strom versorgt. Der ständige Stromverbrauch, der Elektrosmog sowie die Möglichkeit eines Brandes durch ein defektes Netzteil sind die unangenehmen Nebenerscheinungen, hervorgerufen durch das Halten der Geräte im Standby-Betrieb.

Um diesem Problem einer hohen Stromaufnahme im Standby-Betrieb zu begegnen, sind bereits aus der dem Oberbegriff des Anspruchs 1 zugrundeliegenden DE-GM 94 10 498 'Geräte oder Adapter zur Herabsetzung der Standby-Leistung' bekannt. Sie bestehen aus einem Infrarotlicht-Empfänger, einer Meßschaltung zur Erfassung der Leistungsaufnahme des angeschlossenen Geräts sowie einem Netzteil. Der Adapter wird zwischen Steckdose und Gerät geschaltet. Zum Einschalten des angeschlossenen Geräts empfängt der Infrarotlichtempfänger des Adapters den Fernbedienbefehl und schaltet dadurch das Gerät ans Netz. Der nächste Fernbedienbefehl aktiviert dann das Gerät. Da die Fernbedienung in der Regel während des Drückens einer Taste den Befehl ständig wiederholt, gibt es bei der Verwendung eines solchen Adapters nur eine unwesentliche Einschaltverzögerung. Ist das Gerät eingeschaltet, wird es über die Meßschaltung selbständig am Netz gehalten. Erst wenn nach dem Ausschalten des Geräts mit der Fernbedienung die Leistungsaufnahme unter einen vorbestimmten Wert abfällt, wird es wieder vom Netz getrennt. Der Nachteil der bisher bekannten Adapter liegt jedoch darin, daß auch bei diesen Geräten die Gefahr eines Brandes nicht auszuschließen ist und dieser Adapter Strom verbraucht, unter Umständen sogar mehr als das angeschlossene Gerät.

Ein nicht unwesentlicher Faktor im Stromverbrauch stellt die Photodiode dar. Bei Beleuchtung mit Fremdlicht in Form von Gleichlicht stellt sich ein Photostrom ein, der aus der Batteriespannung kompensiert werden muß, um die Photodiode unterhalb der Sättigungsspannung zu halten, damit diese noch in der Lage ist, von der Fernbedienung erzeugte gepulste Lichtsignale in nutzbare Ausgangssignale umzuwandeln. Dieser Strom kann bei Sonnenlichteinstrahlung bis zu einigen Milliampere betragen.

Um diesem Problem Herr zu werden, ist aus der DE-A 44 31 117.6 bereits eine Schaltung für den Empfang eines Wechsellicht enthaltenden Lichtsignals bekannt. Unter derartige Wechsellicht-Nutzsignale fallen auch die von einer Fernbedienung übermittelten Signale, so daß diese Vorrichtung auch im Bereich der Unterhaltungselektronik eingesetzt werden kann. Um möglichst wenig Strom aus der Stromversorgung zu entnehmen, wird dort vorgeschlagen, eine Photodiode als Empfänger zu betreiben, ohne daß aus der Versorgungsspannung merklich Strom zur Fremdlichtkompensation entnommen werden muß. Diese Schaltung eignet sich für den Einsatz im Netzadapter wie auch für den Einsatz zur Verringerung der Standby-Leistung im in das elektrische Gerät integrierten Betrieb. Bevorzugte Schaltung ist dabei eine Schaltung mit zwei Photodioden und einem Kompensationstransistor. Damit und auch angesichts des beispielhaft niedrig angeführten Stromverbrauchs von 10 µA kann diese Schaltung einem beliebigen Gerät vorgeschaltet werden, um die Standby-Leistung zu verringern. Allerdings wird dort von Photodioden mit einer Sättigungsspannung > 0,4V ausgegangen. Setzt man dagegen nur eine Photodiode oder Photodioden mit einer geringeren Sättigungsspannung und größeren Toleranzabweichungen bei gleichzeitig sehr großer Fremdlichtbelastung ein, ist eine zuverlässige Selbstregelung der Widerstandsschaltung, die einen Betrieb der Photodiode unterhalb der Sättigungsspannung ermöglicht, mit einer einfachen preisgünstigen Transistorschaltung nicht mehr gewährleistet.

Um den Arbeitspunkt einer Photodiode einzustellen, wird in der DE-C 39 30 415 eine Kompensationsspannung mittels einer zweiten Photodiode erzeugt, ohne daß Strom aus der Versorgungsspannung benötigt wird. Die Spannung dieser zweiten Photodiode wird als Gegen- oder Fremdspannung der eigentlichen Photodiode über eine Spule mit einem konstanten Innenwiderstand zugeführt. Somit sind zunächst zwei Photodioden erforderlich, von denen nur eine aktiv das Wechsellicht empfängt. Damit jedoch eine Kompensation der Photospannung durch eine von der zweiten Photodiode erzeugte gleichartige Spannung erfolgen kann, müssen beide Photodioden gleichmäßig beleuchtet werden, was nicht immer gewährleistet ist. Zur Lösung dieses Problems wird vorgeschlagen, die Störsignal-Photodiode größer auszubilden als die Nutzsignal-Photodiode, was die Schaltung verteuert. Variiert wird hier die Spannung, während der Widerstand unverändert bleibt. Die Verwendung einer Spule als Gleichstrompfad hat zudem den Nachteil, daß diese Schaltung nicht in einem IC (integrated circuit) integrierbar ist. Gerade diese Integration wird zudem hier auch dadurch erschwert, daß aufgrund des dem Störsignal-Photosensor parallel geschalteten Kondensator eine Schaltung auf einen symmetrischen Eingang nicht möglich ist.

Üblicherweise verwendete Infrarot-Preamplifier sind aus dem Datenblatt von ITT, TBA 2800 oder auch aus dem Datenblatt der Siemens AG, Infrared Preamplifier TDA 4050-B bekannt. Diese Preamplifier werden üblicherweise in Verbindung mit Standby-Schaltungen eingesetzt. Die Datenblätter geben einen Anhaltspunkt für den üblichen Stromverbrauch der im Fall des TBA 2800 bei 1 mA und beim Siemens TDA 4050-B, Seite 428 oben bei 9 mA liegt und damit einen erheblichen Stromverbrauch darstellt.

Ausgehend von diesem Stand der Technik liegt der vorliegenden Erfindung die Aufgabe zugrunde, eine Vorrichtung der eingangs genannten Gattung derart weiterzubilden, daß ein möglichst stromarmer Betrieb bei vollständiger Trennung des angeschlossenen Geräts vom Netz im Standby-Betrieb gewährleistet ist.

Diese Aufgabe wird durch die Merkmale des Anspruches 1 gelöst.

Um eine Fremdlichtkompensation durchzuführen, ist hier ein Transistor vorgesehen, wobei ein erster Widerstand dafür sorgt, daß bei einer entsprechenden Photodiodenspannung durch Fremdlicht hervorgerufen der Transistor geöffnet wird, um die Kompensation durchzuführen. Bei Phototransistoren mit einer geringeren Sättigungsspannung als der Öffnungsspannung des Transistors wird der Basis ein zusätzlicher Strom über einen hochohmigen Widerstand zugeführt, so daß auch unter diesen Umständen die Kompensation über den Transistor möglich ist. Durch diese Schaltung können auch günstigere Photodioden mit größeren Toleranzabweichungen verwendet werden. Die vorgeschlagene Schaltung führt damit zur Verringerung des Preises bei einem Gerät zur Verringerung der Standby-Leistung, das als Zusatzgerät oder integriertes Gerät zu millionenfach verkauften Geräten nicht nur der Unterhaltungselektronik verwendbar ist.

Schon allein um die Gefahr eines Brandes zu verringern, ist eine vollständige Trennung des Geräts vom Netz erwünscht. Andererseits muß die Vorrichtung insbesondere beim Einsatz als Netzadapter auf die Leistung des angeschlossenen Geräts eingestellt werden, damit bei Abfall der Leistungsaufnahme unter einen bestimmten Wert, das Gerät tatsächlich vom Netz getrennt wird. Mit dem Stand der Technik wird nun nach Anspruch 3 zwar ein Optokoppler eingesetzt, jedoch wird der Optokoppler als Generator eingesetzt, so daß kein Strom zur Kompensation aus der Spannungsversorgung entnommen werden muß. Gleichzeitig kann das Potentiometer zur Einstellung der Ansprechleistung auf der netzgetrennten Seite angeordnet werden, so daß ein Schutz gegen versehentliche Berührung nicht zwingend erforderlich ist und eine kostengünstigere Bauform möglich ist.

Weitere Vorteile ergeben sich aus den Unteransprüchen.

Im folgenden wird die Erfindung anhand eines Ausführungsbeispiels näher erläutert. Es zeigen:
- Fig. 1: Die schematische Darstellung eines über eine Fernbedienung betätigbaren elektrischen Geräts,
- Fig. 2: ein Blockschaltbild eines Netzadapters,
- Fig. 3: eine Schaltung zur Fremdlichtkompensation.

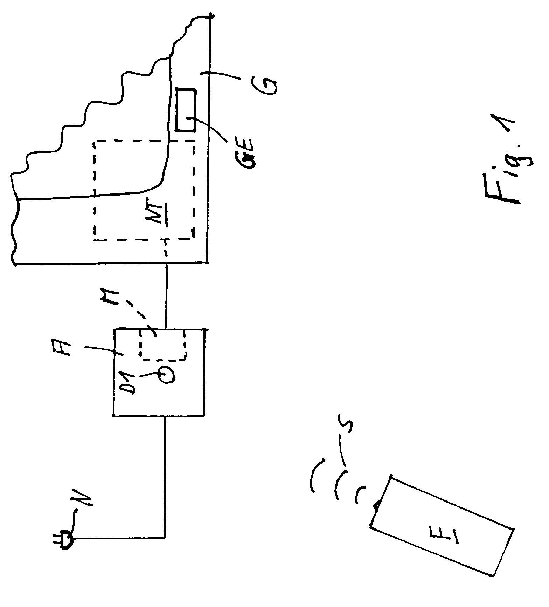

Gemäß Fig. 1 ist ein über eine Fernbedienung F betätigbares Gerät vorgesehen, das im Standby-Betrieb über die Fernbedienung einschaltbar ist. Hierzu empfängt das Gerät über seinen Geräteempfänger GE Signale der Fernbedienung. Im Ausführungsbeispiel handelt es sich bei dem Gerät z.B. um ein Fernsehgerät. Dennoch ist der Einsatz der Vorrichtung auch an anderen Geräten durchaus denkbar.

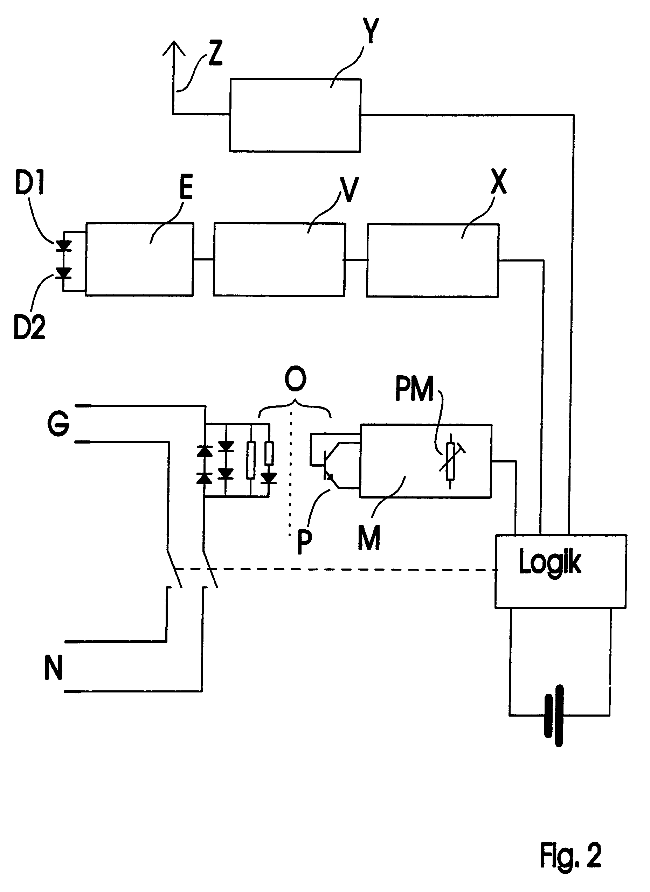

Um die Standby-Leistung zu verringern, ist ein Netzadapter A vorgesehen, der im Ausführungsbeispiel zwischen dem Netzanschluß N und dem Netzteil NT des Geräts G angeordnet ist. Grundsätzlich kann jedoch diese Vorrichtung auch in das Gerät selbst integriert sein. Dem Blockschaltbild in Fig. 2 läßt sich der grundsätzliche Aufbau der als Netzadapter A ausgebildeten Vorrichtung entnehmen. Zum Empfang der gepulsten Lichtsignale ist eine Empfängerschaltung E mit wenigstens einer unterhalb einer Sättigungsspannung zu betreibenden Photodiode D1,D2 vorgesehen. Die von der Empfängerschaltung empfangenen Signale werden einer Verstärkerschaltung V zugeführt, um Ausgangssignale AS zu erzeugen. Ferner ist eine Störunterdrückung X, insbesondere zur Unterdrückung von Netzstörungen ebenso vorgesehen wie ein Störimpulsverstärker Y, der das Gerät gegen Überspannungsspitzen, wie sie z.B. bei Gewittern auftreten unempfindlich macht. Eine Meßschaltung M zur Erfassung der Leistungsaufnahme des Geräts ist über einen Optokoppler O an das Gerät angekoppelt, die bei Abfall der Leistungsaufnahme unter einen über ein Potentiometer PM einstellbaren Grenzwert das Gerät vom Netz trennt. Auf das Potentiometer kann verzichtet werden, wenn der Adapter in das Gerät integriert ist, so daß eine feste Einstellung des Grenzwertes vorgenommen werden kann.

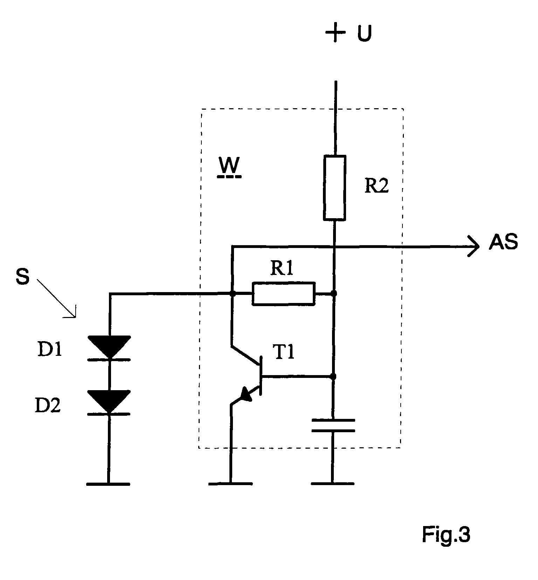

Fig. 3 verdeutlicht den Aufbau der Empfängerschaltung zur Fremdlichtkompensation. Außer den Photodioden D1,D2 zum Empfang der gepulsten Lichtsignale S ist parallel zur Photodiode eine Widerstandsschaltung W zur Kompensation von Fremdlichtanteilen in Form von Gleichlichtsignalen vorgesehen. Die in Fig. 3 gestrichelt eingefaßte Widerstandsschaltung W umfaßt einen selbstregelnden Transistor T1, der spannungsabhängig seinen Widerstand ändert, sobald eine vorgegebene Spannung unterhalb der Sättigungsspannung der Photodiode überschritten ist. Durch den spannungsabhängigen Widerstand wird die Photodiode D1,D2 belastet, bis die vorgegebene Spannung im wesentlichen erreicht ist. Zur Kollektor-Basisstrecke des Transistors T1 ist ein erster Widerstand R1 parallel geschaltet. Ein hochohmiger Widerstand R2 ist zwischen der Basis des Transistors T1 und der Versorgungsspannung U angeordnet.

Bei einer entsprechenden Photodiodenspannung durch Fremdlicht hervorgerufen reicht bei einer Photodiodensättigungsspannung (D1/D2) < 0,8V der Strom durch den ersten Widerstand R1 nicht aus, um den Transistor T1 entsprechend zu öffnen und die Photodiodenspannung unterhalb der Sättigungsspannung zu halten. Eine Verkleinerung von R1 würde sich aber negativ auf die Empfindlichkeit auswirken. Unter diesen Voraussetzungen wird nun der Widerstand R2 aktiv, dessen Wert im Bereich von einigen MΩ liegt, im Ausführungsbeispiel beträgt er 10 MΩ. Im Fall zu geringer Ausgangsspannung z.B. bei Phototransistoren mit einer geringeren Sättigungsspannung als der Öffnungsspannung des Transistors wird der Basis von T1 über diesen hochohmigen Widerstand R2 ein zusätzlicher Strom zugeführt, so daß die Spannung am Kollektor unterhalb der Sättigungsspannung der Photodioden bleibt. Ohne oder mit nur sehr geringem Fremdlichtstrom würde der Transistor T1 als Schalter wirken und das gepulste Lichtsignal S von der Fernbedienung kurzschließen. Dies wird jedoch durch den ersten Widerstand R1 verhindert. Sein Wert wird im Verhältnis zum Wert des hochohmigen Widerstandes R2 so gewählt, daß bei kurzgeschlossener Emitter-Kollektorstrecke des Transistors T1 am Mittelanschluß R1/R2 eine Spannung < 0,6 Volt, also kleiner als die Öffnungsspannung des Transistors T1 anliegt.

Dadurch wird gewährleistet, daß die Spannung am Kollektor des Transistors T1 nicht zu Null werden kann. Bei hohem Fremdlichtanteil fließt somit der Strom durch den ersten Widerstand R1 vom Kollektor zum Basisanschluß, dagegen kehrt er sich bei geringem Fremdlichtanteil um und fließt vom Basisanschluß zum Kollektor. Dadurch können auch Dioden mit einer geringeren Sättigungsspannung oder mit größeren Toleranzabweichungen eingesetzt werden. Ebenso ist der Einsatz nur einer einzigen Photodiode möglich.

Um die Stromaufnahme der Vorrichtung weiter zu verringern und das angeschlossene Gerät weitestgehend vom Netz zu trennen, ist auch die Meßschaltung zur Leistungserfassung des angeschlossenen Geräts gemäß Fig. 2 entsprechend ausgebildet. Die Leistung des an den Netzadapter angeschlossenen Gerätes läßt sich am einfachsten über den Spannungsabfall an einem in Reihe zum Verbraucher geschalteten Widerstand messen.

Zur Netzisolation kann ein Optokoppler O dienen. Ein Teil der am Widerstand abfallenden Spannung versorgt die Sende-LED des Optokopplers O. Der Phototransistor P des Optokopplers schaltet bei einer bestimmten Leistung des angeschlossenen Gerätes durch. Die Schaltinformation wird in der anschließenden Logik weiterverarbeitet. Zur Einstellung der Ansprechleistung wird der in Reihe zum Verbraucher geschaltete Widerstand als Potentiometer ausgeführt. Während im Stand der Technik dieses Potentiometer im netzverbundenen Teil der Schaltung liegt und gegen Berührung beim Einstellen entsprechend gesichert werden muß, erfolgt die Einstellung der Ansprechleistung nun auf der netzgetrennten Seite des Optokopplers.

Zur linearen Erfassung der Leistung des Verbrauchers wird der Phototransistor nicht wie üblich als Schalter oder gegengekoppelter Verstärker mit einem Kompensationsstrom für die Photodiodenstrecke aus der Versorgungsspannung eingesetzt, sondern nur die Photodiodenstrecke des Phototransistors wird als Spannungsgenerator genutzt. Die Einstellung der Ansprechleistung erfolgt durch ein parallel zur Photodiodenstrecke geschaltetes Potentiometer PM, das die Ausgangsleistung der Photodiode entsprechend belastet. Die integrierte Spannung an der Photodiode entspricht dann in einem weiten Bereich der netzseitig angeschlossenen Leistung. Über einen Schwellwertschalter kann dann bei einem durch das Potentiometer vorbestimmten Leistungswert z.B. ein Schaltvorgang ausgelöst werden, also das Gerät z.B. vom Netz getrennt werden. Diese Schaltungsart hat den Vorteil, daß das Potentiometer nicht gegen versehentliche Berührung geschützt werden muß und somit kostengünstiger ausgeführt werden kann. Durch die Beschaltung des Optokopplers als Generator braucht kein Strom zur Kompensation aus der Spannungsversorgung entnommen werden.

Um den Stromverbrauch des Netzadapters weiter zu reduzieren, wird auch die Verstärkerschaltung V entsprechend angepaßt. Um nämlich Störungen durch Glühlampen und moduliertes Fremdlicht zu vermeiden, legt man die Taktfrequenzen eines Infrarotsenders oberhalb dieses Störspektrums, in der Regel in den Bereich von 30 bis 50 kHz. Standard-Empfängermodule für diesen Frequenzbereich verbrauchen bis zu einigen Milliampere, so daß für sie ein Batteriebetrieb nicht in Frage kommen kann. Der Strom wird bedingt durch die nötige Bandbreite des Verstärkers zur sicheren Verstärkung der Taktfrequenz von 30 bis 50 kHz. Im Ausführungsbeispiel wird nicht die hohe Taktfrequenz des eigentlichen Trägersignals, sondern der niederfrequente Datenwortanteil des Fernbedienbefehls erfaßt. Dazu werden mehrere Einzelimpulse oder Impulsgruppen zusammengefaßt und wie ein Einzelimpuls mit niedriger Frequenz verarbeitet. Die Integration der Einzelimpulse erfolgt schon in der Photodiode D1,D2, hauptsächlich jedoch in den integrierten Verstärkerstufen V. Niederfrequente Netzstörungen im 50 Hz-Bereich werden über einen Hochpaßverhalten unterdrückt. Die untere Grenzfrequenz des Empfängers liegt bei 500 Hz, die obere wird von den Verstärkerstufen bestimmt und sollte nicht unter 2 kHz liegen. Unter diesen Voraussetzungen läßt sich die Verstärkerschaltung V mit einem Stromverbrauch von 2 bis 3 µA bei 60 dB Verstärkung realisieren.

Spezielle Lampenarten bzw. die unmittelbare Nähe des Netzadapters zu Netzleitungen können zu ständigen Störimpulsen mit 20 ms Wiederholzeit führen. Zur Ausblendung dieser Störimpulse ist eine Störunterdrückung X vorgesehen. Die abfallende Flanke des Störimpulses startet einen Timer mit einer Zeit von z.B. 15 ms. Mit dem Ausgangssignal des Timers wird eine Torschaltung gesteuert, die nur Impulse kurz nach bis eine gewisse Zeit, z.B. 5 ms vor dem Eintreffen des nächsten Störimpulses durchschaltet. Dadurch wird gewährleistet, daß Störimpulse des Stromnetzes nicht erfaßt werden. Datensignale einer Fernbedienung hingegen bestehen aus mehreren Impulsen oder Impulspaketen mit deutlich weniger als 20 ms Abstand. Der erste Impuls öffnet die Torschaltung, so daß die nachfolgenden Impulse des Fernbediensignals zur weiteren Verarbeitung gelangen. Die Steuerung der Torzeit kann durch die abfallende Flanke des ersten Impulses der Fernbedienung (oder des Störsignales) oder durch die ansteigende Flanke und einen zusätzlichen Timer erfolgen. Die Torzeit wird in diesem Falle erst nach Ablauf der zusätzlichen Timerzeit gestartet.

Aufgrund des gewünschten niedrigen Stromverbrauches zeigt die Infrarotlicht-Empfangsschaltung extrem hohe Widerstände der einzelnen Verstärkerstufen. Daher würden sich elektrische Störimpulse durch Einschalten einer induktiven Last oder durch Blitzeinschläge in nächster Nähe im allgemeinen nur mit umfangreichen Abschirmungen aus geeignetem Material wie z.B. Blech ausreichend unterdrücken lassen. Diese mechanischen Teile sind sehr kostenintensiv.

Aus diesem Grunde wird zusätzlich zur Verstärkerschaltung V ein Störimpulsverstärker Y mit hochohmigem Eingang und einer kürzeren Signallaufzeit als die der Verstärkerschaltung V vorgesehen. Der Eingang wird mit einer kurzen "Antenne" Z wie z.B. einem einigen Zentimeter langen Draht verbunden. Der Frequenzgang des Störimpulsverstärkers entspricht im wesentlichen der Verstärkerschaltung V. Das Ausgangssignal des Störimpulsverstärkers Y wird einem Kurzzeitspeicher K zugeführt, der einen Störimpuls um eine bestimmte Zeit verlängert. Dieses Signal wirkt auf das Ausgangssignal der Verstärkerschaltung V derart, daß er dieses bei Anliegen eines Störimpulses unterdrückt.

Dadurch ist sichergestellt, daß bei Eintreffen eines Störimpulses das Ausgangssignal der Verstärkerschaltung V unterdrückt wird, noch bevor das Störsignal den Signalweg in der Verstärkerschaltung vollständig durchlaufen hat. Der Kurzzeitspeicher K verhindert eine frühzeitige Aufschaltung der Verstärkerschaltung aufgrund der kürzeren Signallaufzeit im Störimpulsverstärker Y. Seine Speicherzeit kann bis zu einigen Sekunden betragen, um bei einem Gewitter Störungen durch Nachentladungen zu vermeiden. Durch diese Schaltung kann eine mechanische Abschirmung vollständig entfallen.

## Patentansprüche

1. Vorrichtung zur Verringerung der Standby-Leistung eines elektrischen, über eine Fernbedienung (F) betätigbaren Geräts mit
- einer Empfängerschaltung mit wenigstens einer unterhalb einer Sättigungsspannung zu betreibenden Photodiode (D1,D2) zum Empfang der von der Fernbedienung gesendeten, gepulsten Lichtsignale (S),
- einer parallel zur Photodiode geschalteten Widerstandsschaltung (W) zur Kompensation von Gleichlichtsignalen,
- einer Verstärkerschaltung (V) zur Verstärkung der von der Empfängerschaltung empfangenen Signale, insbesondere der Einschaltsignale zum Einschalten des Geräts, in Ausgangssignale (AS),
- einer Meßschaltung (M) für die Leistungsaufnahme des Geräts, die bei Abfall der Leistungsaufnahme unter einen Grenzwert das Gerät vom Netz trennt,
- einem Netzanschluß (N) für eine Versorgungsspannung (U), dadurch gekennzeichnet, daß
- die Widerstandsschaltung (W) einen selbstregelnden Transistor (T1) als Widerstand aufweist, der spannungsabhängig seinen Widerstand ändert, sobald eine vorgegebene Spannung unterhalb der Sättigungsspannung der Photodiode überschritten ist, und durch den spannungsabhängigen Widerstand die Photodiode (D1,D2) belastet, bis die vorgegebene Spannung im wesentlichen erreicht ist,
- ein erster Widerstand (R1) parallel zur Kollektor-Basisstrecke des Transistors (T1) geschalten ist und
- ein hochohmiger Widerstand (R2) zwischen der Basis des Transistors (T1) und der Versorgungsspannung (U) angeordnet ist, wobei der erste Widerstand (R1) im Verhältnis zum hochohmigen Widerstand (R2) so gewählt ist, daß bei kurzgeschlossener Emitter-Kollektorstrecke des Transistors am Mittelanschluß R1/R2 eine Spannung anliegt, die kleiner als die Öffnungsspannung des Transistors (T1) ist.

2. Vorrichtung nach Anspruch 1, dadurch gekennzeichnet, daß der hochohmige Widerstand (R2) einen Widerstand von einigen MΩ aufweist.

3. Vorrichtung nach Anspruch 1, dadurch gekennzeichnet, daß die Meßschaltung (M) einen Optokoppler (O) und einen Phototransistor (P) aufweist, dessen Photodiodenstrecke als Spannungsgenerator genutzt wird, wobei parallel zur Photodiodenstrecke ein Potentiometer (PM) geschaltet ist, das die Ausgangsleistung der Photodiode (D1,D2) entsprechend belastet und auf der netzgetrennten Seite des Optokopplers angeordnet ist.

4. Vorrichtung nach einem der vorhergehenden Ansprüche, dadurch gekennzeichnet, daß der niederfrequente Datenwortanteil mehrerer einzelner Lichtsignale in der Photodiode (D1,D2) und/oder in der Verstärkerschaltung (V) integriert wird.

5. Vorrichtung nach einem der vorhergehenden Ansprüche, dadurch gekennzeichnet, daß niederfrequente Netzstörungen durch einen Hochpaß (H) unterdrückt werden und daß der Frequenzgang des Empfängers vorzugsweise von etwa 500 Hz bis über 2Khz reicht.
